# EUROPÄISCHE PATENTSCHRIFT

(11) **EP 1 283 809 B1**
(45) Veröffentlichungstag und Bekanntmachung des Hinweises auf die Patenterteilung: **10.08.2005**
(21) Anmeldenummer: 01909513.2
(22) Anmeldetag: 24.01.2001
(51) Int. Cl.: B65G 1/04, B65G 1/06, B65H 19/12

(54) **VORRICHTUNG ZUR FÖRDERUNG EINER VORRATSROLLE**
DEVICE FOR CONVEYING A SUPPLY ROLL
DISPOSITIF DE TRANSPORT D'UN ROULEAU

(30) Priorität: 28.04.2000 DE 10020909
(43) Veröffentlichungstag der Anmeldung: 19.02.2003
(73) Patentinhaber: Koenig & Bauer Aktiengesellschaft, 97080 Würzburg (DE)
(72) Erfinder: LEHRIEDER, Erwin, Paul, Josef, 97253 Gaukönigshofen (DE); RÖSCH, Andreas, Bruno, 97753 Karlstadt (DE)
(86) Internationale Anmeldenummer: PCT/DE2001/000264
(87) Internationale Veröffentlichungsnummer: WO 2001/083334

(56) Entgegenhaltungen:
- EP-A- 0 096 323
- WO-A-98/12133
- DE-A- 2 944 265
- DE-A- 3 221 343
- DE-C- 19 853 026

## Beschreibung

Die Erfindung betrifft eine Vorrichtung zur Förderung einer Vorratsrolle gemäß dem Oberbegriff des Anspruchs 1.

Aus der WO 98/12133 A1 sind Plattenbandförderer bekannt, auf die die Papierrollen liegend, d. h. mit annähernd horizontal verlaufender Längsachse, abgelegt und in Richtung der Stimflächen der Papierrollen gefördert werden können. Weiter sind aus der WO 98/12133 A1 Transportwagen bekannt, die mit den Papierrollen beladen auf Gleisen durch die Druckerei verfahren werden können.

Aus der DE 39 10 444 C2 sind führerlose Transportfahrzeuge bekannt, die mit den Papierrollen beladen aus dem Rollenlager zu den Rotationsdruckmaschinen verfahren werden können. Zur Förderung der Papierrollen im Rollenlager ist gemäß der DE 39 10 444 C2 eine abschüssige Rollenvorlagefläche vorgesehen. D. h. das Rollenlager weist eine schräg von oben nach unten in Förderrichtung verlaufende Rollenvorlagefläche auf, an deren oberen Ende die Papierrollen abgeladen werden. Aufgrund der auf die Papierrollen wirkenden Gewichtskraft und der abschüssige Rollenvorlagefläche entsteht als resultierende Kraft eine in Förderrichtung gerichtete Hangabtriebskraft, so dass die Papierrollen ohne zusätzliche Antriebseinrichtung auf der Rollenvorlagefläche nach unten abrollen und somit in Förderrichtung gefördert werden können. Zur Steuerung der Förderbewegung sind gemäß der DE 39 10 444 C2 in der Rollenvorlagefläche Pufferelemente angeordnet, mit denen die abrollenden Papierrollen abgebremst werden können.

Die GB 22 44 984 A offenbart Vorratsrollen, die auf einer Fläche abrollen und von oben mittels einer umlaufenden Antriebseinrichtung transportiert werden.

Die DE 21 45 179 A1 zeigt Vorratsrollen, die mittels Schieberblöcken auf Transportwagen geladen werden.

Die DE 29 44 265 A1 beschreibt ein umlaufendes Transportband mit Aufnahmen für Vorratsrollen.

Aus der DE 32 21 343 A ist eine Vorrichtung zum Transportieren und Speichern von Papierschlauchpaketen, gemäß dem Oberbegriff des Anspruchs 1, bekannt.

Der Erfindung liegt die Aufgabe zugrunde, eine Vorrichtung zur Förderung einer Vorratsrollen zu schaffen.

Die Aufgabe wird erfindungsgemäß durch die Merkmale des Anspruchs 1 gelöst.

Vorteilhafte Ausführungsformen der Erfindung sind Gegenstand der Unteransprüche.

Der mit der Erfindung erzielbare Vorteil besteht insbesondere darin, dass durch Antrieb der Antriebseinrichtung die Vorratsrollen unabhängig von der auf die Vorratsrollen wirkenden Gewichtskräfte auf der Rollenvorlagefläche in Förderrichtung gefördert werden können. Dazu wird das Obertrum der umlaufend antreibbaren Antriebseinrichtung mittelbar oder unmittelbar von unten mit der Mantelfläche in Kontakt gebracht, so dass durch Antrieb der Antriebseinrichtung eine in Förderrichtung gerichtete Kraft von der Antriebseinrichtung auf die Vorratsrolle übertragen wird. Neben der Antriebseinrichtung kann das Transportelement weitere Komponenten, beispielsweise einen Rahmen, Antriebsmotoren, Federelemente usw., enthalten.

Da die zu fördernden Vorratsrollen ein teilweise sehr hohes Gewicht aufweisen, folgt durch die Lagerung derartiger Vorratsrollen auf einer abschüssigen Rollenvorlagefläche ein erhebliches Gefährdungspotential für die Bediener. Nach einer bevorzugten Ausführungsform erstreckt sich deshalb die Rollenvorlagefläche im wesentlichen horizontal. Die Rollenvorlagefläche kann auch leicht geneigt sein, um die Förderbewegung der Antriebseinrichtung zu unterstützen. Daraus folgt, dass auf die Vorratsrollen im wesentlichen keine ihrem Gewicht entsprechende Hangabtriebskräfte wirken und der Antrieb der Vorratsrollen allein durch Ansteuerung der Antriebseinrichtung erfolgt. Das Gefährdungspotential durch eine ungewollt auf der Rollenvorlagefläche nach unten abrollenden Vorratsrolle ist dadurch ausgeräumt, da selbst bei totalem Ausfall der Vorrichtung die Vorratsrollen antriebslos in ihrer jeweiligen Position liegen bleiben. Dementsprechend kann einer derartigen Vorrichtung zur Förderung von Vorratsrollen einfacher, insbesondere ohne zusätzliche Absicherung, automatisiert werden, da die Beaufsichtigung der Vorrichtung durch das Bedienpersonal wegen der geringeren Gefährdung von Menschen nicht zwingend erforderlich ist.

Da zur Förderung der Vorratsrollen keine Höhendifferenz erforderlich ist, ist es besonders vorteilhaft, wenn die Rollenvorlagefläche im wesentlichen bodeneben angeordnet ist. Dadurch wird ein Anheben der schweren Vorratsrollen, um diese auf die Rollenvorlagefläche aufzulegen, weitgehend entbehrlich.

Zum Weitertransport der Vorratsrollen von der Vorrichtung zu anderen Arbeitsstationen können Transportmittel, beispielsweise ein Rollwagen mit einem muldenartig geformten Auflageelement, auf dem die Vorratsrolle abgelegt werden kann, an einer Seite der Vorrichtung vorgesehen sein. Entspricht die Höhe der Rollenvorlagefläche zumindest auf der Seite, an der das Transportmittel angeordnet wird, im wesentlichen der Höhe der Oberkante des Transportmittels, folgt daraus, dass die Vorratsrollen im wesentlichen ohne Anheben bzw. Halten von der Rollenvorlagefläche auf das Transportmittel und gegebenenfalls vom Transportmittel auf die Rollenvorlagefläche zurück gerollt werden kann.

Sind an der Vorrichtung mehrere Antriebseinrichtungen vorgesehen, so ist es vorteilhaft, wenn diese einzeln und/oder in Gruppen getrennt voneinander ansteuerbar sind. Dadurch können, falls auf der Rollenvorlagefläche mehrere Vorratsrollen gelagert sind, diese einzeln und unabhängig voneinander auf der Rollenvorlagefläche in Förderrichtung gefördert werden.

Durch eine Reversierung der Antriebseinrichtungen eine Umkehrung der Förderrichtung der Vorratsrollen möglich, so dass auch Vorratsrollen ausgeschleust werden können.

Ist die Antriebseinrichtung im wesentlichen rechtwinklig zur Längsachse der Vorratsrolle angeordnet, kann jeweils nur eine im wesentlichen punktförmig zusätzlich linienförmig an der Mantelfläche der Vorratsrolle angreifende Antriebskraft von einer Antriebseinrichtung auf eine Vorratsrolle übertragen werden. Damit die Vorratsrollen in den Fällen, in denen die Antriebskraft außermittig angreift um ihre durch den Schwerpunkt verlaufende Vertikalachse verdreht werden, können an der Vorrichtung zumindest zwei parallel zueinander in Förderrichtung verlaufende Antriebseinrichtungen vorgesehen sein. Wird die Vorratsrolle dann in der Weise auf der Rollenvorlagefläche abgelegt, dass der Schwerpunkt zwischen den beiden parallel zueinander verlaufenden Antriebseinrichtungen liegt, kann durch Synchronbetrieb der beiden Antriebseinrichtungen ein Verdrehen der Vorratsrolle ausgeschlossen werden und somit eine ausschließlich linear gerichtete Abrollbewegung bewirkt werden.

Der seitliche Abstand zwischen den parallel verlaufenden Antriebseinrichtungen sollte kleiner oder gleich der halben Achslänge der fördernden Vorratsrollen sein. Werden mehr als drei Antriebseinrichtungen an der Vorrichtung vorgesehen, ist durch diesen maximalen Abstand zwischen den Antriebseinrichtungen gesichert, dass die zu fördernden Vorratsrollen jeweils mit mindestens zwei Antriebseinrichtungen in Kontakt sind. Als besonders vorteilhaft hat es sich herausgestellt, wenn der Abstand zwischen den Antriebseinrichtungen im wesentlichen einem Drittel der Achslänge der zu fördernden Vorratsrollen entspricht. Im Ergebnis steht dadurch pro Viertel der Vorratsrolle eine Antriebseinrichtung zur Verfügung, was eine jederzeit zuverlässige Förderung der Vorratsrollen ermöglicht.

Grundsätzlich ist es denkbar, die Vorrichtungen in an sich beliebiger Länge herzustellen. Damit können die Vorratsrollen entlang einer an sich beliebig langen Strecke auf der Rollenvorlagefläche gefördert werden. Kostengünstiger ist es jedoch, Transportelemente mit Antriebseinrichtungen herzustellen, die einer oder mehreren bestimmten Längen, beispielsweise den Standardlängen eines Baukastensystems, entsprechen. Bei der Konstruktion von Vorrichtungen, deren Rollenvorlagefläche nicht der Länge der zur Verfügung stehenden Antriebseinrichtungen entsprechen, können mehrere dieser Antriebseinrichtungen kombiniert und in Förderrichtung hintereinander angeordnet werden. Weisen die einzelnen hintereinander angeordneten Antriebseinrichtungen keinen oder jeweils nur einen geringen seitlichen Versatz auf, d. h. wenn sie im wesentlichen in einer Linie verlaufen, bilden sie zusammen einen Antriebsstrang, der sich über die gesamte Länge der Rollenvorlagefläche erstrecken kann. Die hintereinander angeordneten Antriebseinrichtungen könne aber auch einen größeren seitlichen Versatz aufweisen, solange sichergestellt ist, dass in jedem Bereich der Rollenvorlagefläche immer eine ausreichende Anzahl von Antriebseinrichtungen gleichzeitig an den Vorratsrollen zur Anlage kommen können.

Werden die Antriebseinrichtungen direkt im Anschluss hintereinander angeordnet, so dass sich jeweils zwischen den hintereinander angeordneten Antriebseinrichtungen eine Stoßkante bzw. ein bestimmter Abstand ergibt, kann im Bereich zwischen den Antriebseinrichtungen eventuell keine ausreichende Antriebskraft auf die Vorratsrollen übertragen werden, da in diesem Bereich keine der jeweils hintereinander angeordneten Antriebseinrichtungen in der erforderlichen Weise mit der Vorratsrolle in Kontakt kommt. Es ist deshalb vorteilhaft, wenn die hintereinander angeordneten Antriebseinrichtungen eine zumindest geringfügige Überdeckung in Förderrichtung aufweisen. Dazu können die Antriebseinrichtungen seitlich versetzt angeordnet werden, wobei der Versatz zumindest der Breite der Antriebseinrichtungen entsprechen muss. Außerdem können sich die Antriebseinrichtungen ihrer Länge nach jeweils so weit erstrecken, dass das Obertrum einer nachfolgenden Antriebseinrichtung bereits vor dem Ende des Obertrums der vorhergehenden Antriebseinrichtung beginnt. Im Ergebnis kommen im Überdeckungsbereich der hintereinander angeordneten Antriebseinrichtungen jeweils beide hintereinander angeordnete Antriebseinrichtungen seitlich versetzt mit der Mantelfläche der Vorratsrolle in Kontakt.

Die zur Förderung der Vorratsrolle erforderliche Kraft kann form- und/oder kraftschlüssig übertragen werden. Wird die Kraft durch an der Mantelfläche der Vorratsrolle anliegende Formelemente formschlüssig übertragen, kann die Oberfläche der Vorratsrolle dadurch besonders schonend behandelt werden, dass die Formelemente als rotationssymmetrische Bauteile, also in der Art von Rollen oder Walzen, ausgebildet sind. Sind die Rollen oder Walzen dabei zugleich frei drehbar gelagert, kann die Antriebsrolle bzw. -walze während des Antriebs im wesentlichen widerstandsfrei auf der Vorratsrolle abrollen, so dass die Oberfläche der Vorratsrolle nicht zerkratzt oder aufgerissen wird.

Damit die Antriebskraft von der Antriebseinrichtung auf die Vorratsrolle übertragbar ist, insbesondere bei reibschlüssiger Kraftübertragung, kann es erforderlich sein, dass die Antriebseinrichtung unter einem bestimmten Druck gegen die Unterseite der Vorratsrolle gedrückt wird. Damit dieser Antriebsdruck möglichst gleichmäßig ist und an der Vorratsrolle keine Druckstellen entstehen, können die Teile der Antriebseinrichtung, die mit der Vorratsrolle in Kontakt kommen, federnd gelagert werden. Dadurch kann die Antriebseinrichtung beim Auflegen einer Vorratsrolle elastisch nach unten ausweichen, bis die Vorratsrolle auf der Rollenvorlagefläche zur Anlage kommt.

Dazu können die Teile der Antriebseinrichtung, die mit der Vorratsrolle in Kontakt kommen, beispielsweise ein Antriebsriemen, auf einem Trägerelement abgestützt sein, das gegenüber dem die Rollenvorlagefläche bildenden Teil der Vorrichtung, beispielsweise einem Rahmen oder Gestell, in Richtung der Gewichtskraft federnd gelagert ist. Im Ergebnis wird das Trägerelement durch das Gewicht einer aufliegenden Vorratsrolle entgegen der Federkraft nach unten gedrückt, so dass die Antriebseinrichtung zwischen Vorratsrolle und Trägerelement verpresst wird. Wird die Antriebskraft durch Reibschluss übertragen, kann durch diese Maßnahme sichergestellt werden, dass die Antriebseinrichtung mit einem bestimmten Mindestdruck gegen die Vorratsrolle gepresst wird.

Zur weiteren Rationalisierung von Druckereianlagen kann die Vorrichtung mit einer Steuereinrichtung versehen werden, durch die ein Automatikbetrieb ermöglicht wird. Selbstverständlich kann die Anlage aber auch durch das Bedienpersonal von Hand gesteuert werden, wobei dabei zur Vermeidung von Unfällen besonders der Tipp-Betrieb empfehlenswert ist.
Ist die Antriebseinrichtung in zwei Richtungen, nämlich vorwärts und rückwärts, antreibbar, kann dadurch ein sogenannter Back-up-Betrieb ermöglicht werden. Dabei können die Vorratsrollen durch Antrieb der Antriebseinrichtung in Vorwärtsrichtung aus der Vorrichtung ausgelagert und durch Antrieb in die entgegengesetzte Richtung in die Vorrichtung eingelagert werden. Somit können beispielsweise nur teilweise verbrauchte Vorratsrollen vom Rollenständer zurück in die Vorrichtung eingelagert werden, wobei dieselben Transportmittel zum Transport der Rollen von der Vorrichtung weg, wie zur Vorrichtung hin benutzbar sind. Da bei sich horizontal erstreckender Rollenvorlagefläche keine Hangabtriebskräfte in eine bestimmte Richtung wirken, kann dabei ein Back-up-Betrieb besonders gut realisiert werden. Zur Förderung In beide Förderrichtung muss jeweils die im wesentlichen gleiche Antriebskraft von der Antriebseinrichtung aufgebracht werden.

Ausführungsbeispiele der Erfindung sind in den Zeichnungen dargestellt und werden im folgenden näher beschrieben.

Es zeigen:
- Fig. 1: eine schematisch dargestellte Vorrichtung in einer Draufsicht;
- Fig. 2: die Vorrichtung gemäß Fig. 1 im Querschnitt entlang der Schnittlinie I - I;
- Fig. 3: eine weitere schematisch dargestellte Vorrichtung in perspektivischer Ansicht von oben;
- Fig. 4: eine Antriebseinrichtung der Vorrichtung gemäß Fig. 3.

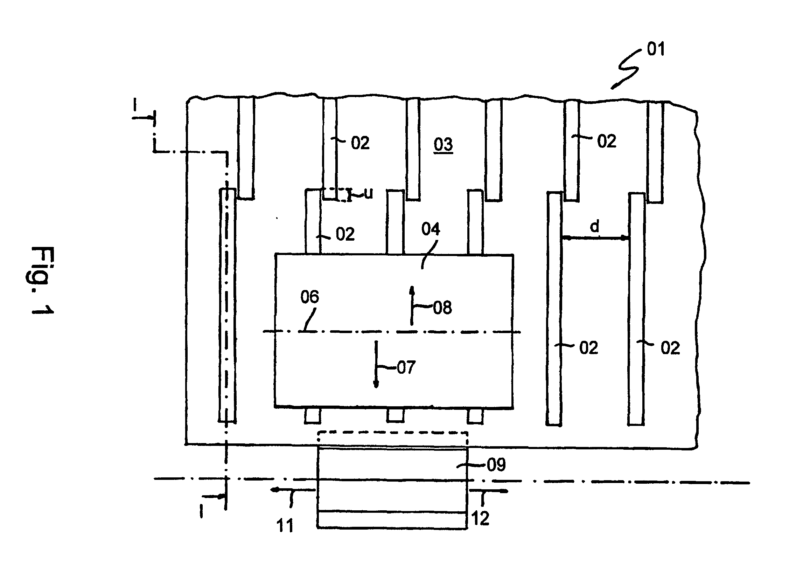

Man erkennt in Fig. 1 den Ausschnitt einer Vorrichtung 01 mit in Fig. 1 lediglich schematisch dargestellten Antriebseinrichtungen 02, die Teile von in Fig. 1 nicht erkennbaren Transportelementen 17 sind. Auf einer ebenen, sich horizontal erstreckenden Rollenvorlagefläche 03 der Vorrichtung 01 können mehrere Vorratsrollen 04 liegend, d. h. mit sich horizontal erstreckender Längsachse 06, abgelegt werden. Die Mantelfläche der Vorratsrolle 04, z. B. der Papierrolle 04 liegt dann bereichsweise auf der Rollenvorlagefläche 03 auf, so dass die Papierrolle 04 durch den wahlweise vorwärts und rückwärts gerichteten Antrieb der Antriebseinrichtungen 02 in zwei Förderrichtungen gefördert werden kann. Die Förderrichtungen sind in Fig. 1 durch Richtungspfeile 07 bzw. 08 angedeutet. An einer Seite der Vorrichtung 01 ist ein Transportmittel 09, beispielsweise ein Rollwagen, angeordnet. Das Transportmittel 09 kann auf nicht dargestellten Gleisen quer zur Förderrichtung der Vorrichtung 01 angetrieben werden, was durch die Richtungspfeile 11 und 12 angedeutet ist.

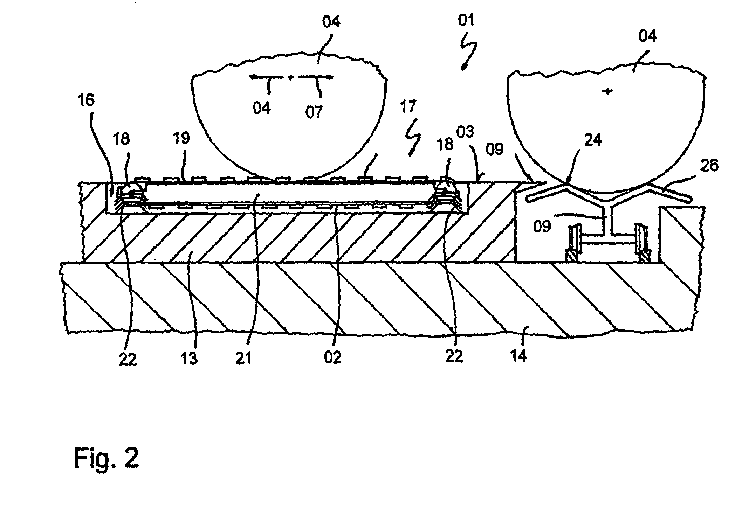

In Fig. 2 ist die Vorrichtung 01 mit einem Transportelement 17 und der zugehörigen Antriebseinrichtung 02 im Querschnitt entlang der Schnittlinie I - I dargestellt. Zur besseren Erkennbarkeit sind die Bauteile des Transportelements 17 nicht im Schnitt dargestellt. Weiter ist das Transportmittel 09 dargestellt, das in dem durch Fig. 2 dargestellten Betriebszustand bereits mit einer Papierrolle 04 beladen ist. Man erkennt einen Sockel 13 der Vorrichtung 01, der auf einem Fundament 14 angeordnet wird und dessen Oberseite die Rollenvorlagefläche 03 bildet. In der Rollenvorlagefläche 03 sind Vertiefungen 16 vorgesehen, in denen jeweils ein Transportelement 17 mit einer Antriebseinrichtung 02, zwei Umlenkwalzen 18, einem Trägerelement 21 und mehreren Federelementen 22 angeordnet ist.

Die Antriebseinrichtung 02 ist bei der Vorrichtung 01 in der Art eines Zahnriemens mit Noppen 23 ausgebildet und kann von den Umlenkwalzen 18 umlaufend in zwei Richtungen angetrieben werden. Die Rollenvorlagefläche 03 erstreckt sich horizontal, so dass bei stillstehenden Antriebseinrichtung 02 keine Antriebskräfte auf die Papierrollen 04 wirken. Werden die Antriebseinrichtungen 02 von den Umlenkwalzen 18 angetrieben, wirken in der Kontaktfläche zwischen Papierrolle 04 und Antriebseinrichtung 02 Reibkräfte, die je nach Antriebsrichtung der Antriebseinrichtung 02 in die Förderrichtungen gemäß der Richtungspfeile 07 oder 08 gerichtet sind.

Damit das Obertrum 19 der Antriebseinrichtung 02 mit ausreichendem Andruck gegen die Papierrolle 04 gepresst wird, ist es auf einem zwischen den Umlenkwalzen 18 angeordneten Trägerelement 21 abgestützt, das zumindest geringfügig über dem Niveau der Rollenvorlagefläche 03 verläuft. Das Trägerelement 21 ist seinerseits auf vier, beispielsweise in der Art von Tellerfederpaketen ausgebildeten Federelementen 22, von denen in Fig. 2 lediglich zwei dargestellt sind, auf dem Sockel 13 abgestützt. Im unbelasteten Zustand stehen die auf der Oberseite des Obertrums 19 angeordnete Noppen 23 etwas über die Höhe der Rollenvorlagefläche 03 nach oben hinaus. Kommt eine Papierrolle 04 von oben auf der Antriebseinrichtung 02 zur Anlage, werden die Noppen 23 und damit die Antriebseinrichtung 02 und das abstützende Trägerelement 21 im Kontaktbereich mit der Papierrolle 04 so weit nach unten gedrückt bis das Niveau der Rollenvorlagefläche 03 erreicht ist. Dabei werden die Federelemente 22 verformt und sorgen dadurch im Kontaktbereich der Antriebseinrichtung 02 mit der Papierrolle 04 für eine der Gewichtskraft entgegengesetzte Federkraft. Das Gewicht der Papierrolle 04 ist im wesentlichen in der Rollenvorlagefläche 03 auf dem Sockel 13 abgestützt.

An einer Seite der Vorrichtung 01 ist das Transportmittel 09 auf Gleisen verfahrbar vorgesehen. Das Transportmittel 09 kann beispielsweise dem Transport der Papierrollen 04 von der Vorrichtung 01 zu einem nicht dargestellten Rollenwechsler, z. B. einer Rollenrotationsdruckmaschine und, beispielsweise im Back-up-Betrieb, zum Rücktransport nur teilweise verbrauchter Papierrollen 04 dienen. Damit die Papierrollen 04 im wesentlichen ohne Anheben von der Rollenvorlagefläche 03 auf das Transportmittel 09 und gegebenenfalls zurück gerollt werden können, ist die Oberkante 24 des Transportmittels 09, die in diesem Fall von der Oberkante 24 eines muldenartig geformten Auflageelements 26 gebildet wird, auf der Höhe der Rollenvorlagefläche 03 angeordnet. Dies kann beispielsweise durch eine entsprechende Wahl der Höhe des Sockels 13 oder durch Wahl der Höhe des Transportmittels 09 erreicht werden.

Damit die beim Überrollen einer Papierrolle 04 von der Rollenvorlagefläche 03 auf das Auflageelement 26 die dabei auf das Transportmittel 09 wirkenden Kippmomente begrenzt werden, steht die Oberkante 27 der Vorrichtung 01 auf der Seite des Transportmittels 09 so weit über, dass das Auflageelement 26 teilweise unterhalb der Oberkante 27 angeordnet werden kann.

Fig. 1 ist zu entnehmen mehrere Antriebseinrichtungen 02 zum einen parallel zueinander in Förderrichtung verlaufend nebeneinander und zum anderen mit geringem seitlichen Versatz hintereinander an der Vorrichtung 01 vorgesehen sind. Der seitliche Abstand d zwischen den parallel zueinander in Förderrichtung verlaufenden Antriebseinrichtungen 02 entspricht im wesentlichen einem Drittel der Achslänge der zu fördernden Papierrollen 04, so dass sichergestellt ist, dass jede Papierrolle 04 auf jeweils drei Antriebseinrichtungen 02 zur Anlage kommt. Die hintereinander angeordneten Antriebseinrichtungen 02 sind ihrer Breite entsprechend seitlich versetzt angeordnet, so dass sich die Enden der Antriebseinrichtungen 02 über das Ende der jeweils nachfolgenden Antriebseinrichtung hinaus erstrecken kann. Im Ergebnis ergibt sich daraus eine Überdeckung u der hintereinander angeordneten Antriebseinrichtungen 02, so dass keine Bereiche zwischen den hintereinander angeordneten Antriebseinrichtungen 02 entstehen, in denen die Papierrolle 04 nicht zuverlässig angetrieben werden können.

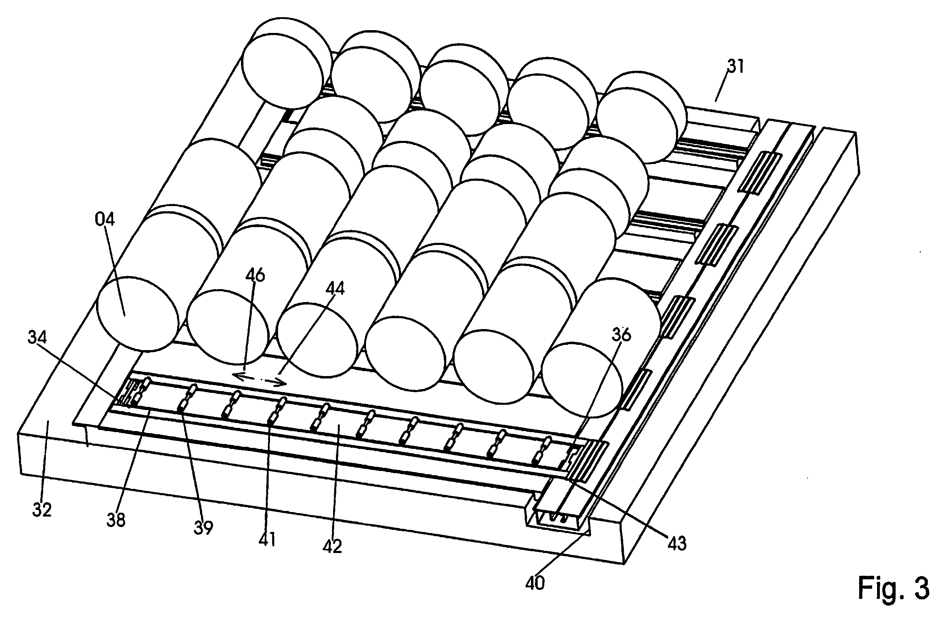

Fig. 3 zeigt eine Vorrichtung 31 mit einer bodeneben horizontal verlaufenden Rollenvorlagefläche 32, auf der eine Vielzahl von Vorratsrollen 33, z. B. Papierrollen 33 neben- und hintereinander gelagert werden können. In Vertiefungen 34 der Rollenvorlagefläche 32 ist jeweils ein Transportelement 36 angeordnet, mit denen die Papierrollen 33 zu entlang nicht dargestellter Gleise verfahrbaren Transportmitteln 37 gefördert werden können. Die Transportmittel 37 sind dabei in einer Vertiefung 40 angeordnet, um bei bodenebener Anordnung der Rollenvorlagefläche 32 ein im wesentlichen gleiches Niveau zwischen einer Oberkante 43 der Rollenvorlagefläche 32 und der Oberkante 43 des Transportmittels 37 zu ermöglichen. Die Papierrollen 33 können je nach Antriebsrichtung der Antriebseinrichtungen 36 in die Förderrichtungen gemäß der Richtungspfeile 44 oder 46 gefördert werden.

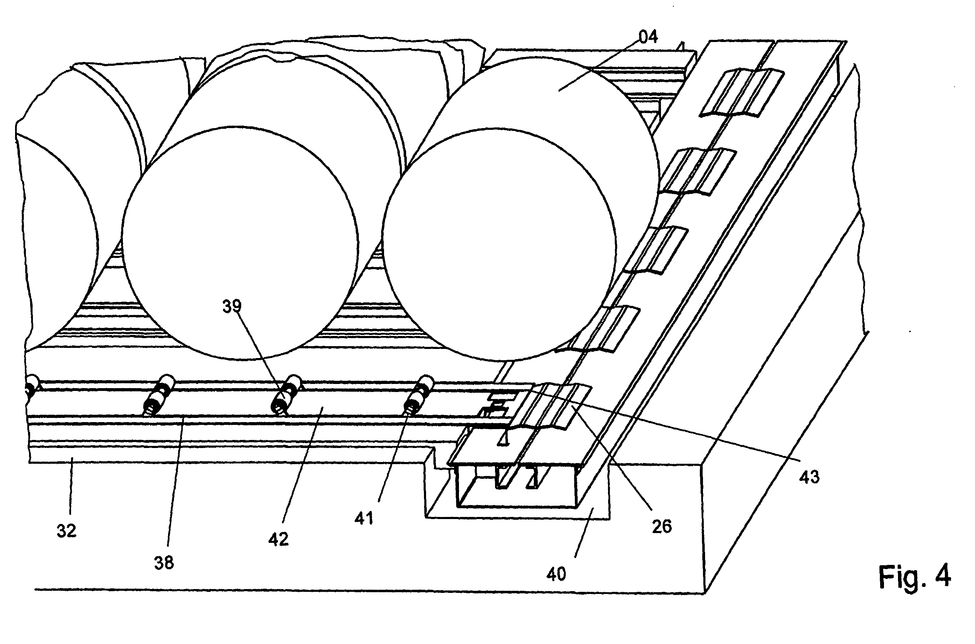

In Fig. 4 erkennt man das eine Ende eines Transportelement 36 in vergrößerter Darstellung. Das Transportelement 36 weist zum Antrieb seitlich zwei in der Art von Antriebsketten 38 ausgebildete Antriebseinrichtungen 38 auf, an deren zu den Papierrollen 33 gewandten Seite als Walzen 39 oder Einzelrollen ausgebildete Formelemente 39 befestigt sind. Zur Befestigung der Formelemente 39 an den beiden Antriebseinrichtungen 38 sind an den Antriebseinrichtungen 38 jeweils paarweise schematisch dargestellte Lagerelemente 41 vorgesehen, zwischen denen die Walzen 39 frei drehbar gelagert sind. Beim Antrieb der Antriebseinrichtungen 38 kommen die Walzen 39 an der Mantelfläche der Papierrollen 33 zur Anlage und nehmen diese in Richtung der Antriebsrichtung der Antriebseinrichtungen 38 mit. Im Ergebnis wird die Antriebskraft also formschlüssig auf die Papierrollen 33 übertragen, wobei eine Beschädigung der Oberfläche der Papierrollen 33 aufgrund der drehbaren Lagerung der Walzen 39 ausgeschlossen ist. Durch ein Abdeckblech 42 können die Vertiefungen 34 abgedeckt werden. Außerdem bildet das Ende des Abdeckblechs 42 die Oberkante 43 der Vorrichtung 31, unter der das Transportmittel 37 angeordnet werden kann.

Die Lagerelemente 41 für die Walzen können vorzugsweise federnd auf den Antriebselementen 38 befestigt sein, so dass eine achsparallele Anpassung an die Mantelfläche der Vorratsrolle möglich ist.

Damit wird ein achsparalleles Ausrichten der Vorratsrolle während der Förderbewegung erreicht.

Die federnde Lagerung der Walze 39 dient als Überlastschutz. Bei Überschreiten einer veränderbaren maximalen Belastung der Walze 39 bzw. der Antriebseinrichtung 38 setzt die Walze 39 auf die Rollenvorlagefläche 32 auf und die auftreffenden Kräfte werden in diese weitergeleitet.

### Bezugszeichenliste

- 01: Vorrichtung
- 02: Antriebseinrichtung
- 03: Rollenvorlagefläche
- 04: Vorratsrolle, Papierrolle
- 05: -
- 06: Längsachse
- 07: Richtungspfeil, Förderrichtung vorwärts
- 08: Richtungspfeil, Förderrichtung rückwärts
- 09: Transportmittel
- 10: -
- 11: Richtungspfeil, Förderrichtung quer
- 12: Richtungspfeil, Förderrichtung quer
- 13: Sockel
- 14: Fundament
- 15: -
- 16: Vertiefung
- 17: Transportelement
- 18: Umlenkwalze
- 19: Obertrum
- 20: -
- 21: Trägerelement
- 22: Federelement
- 23: Noppen
- 24: Oberkante
- 25: -
- 26: Auflageelement
- 27: Oberkante
- 31: Vorrichtung
- 32: Rollenvorlagefläche
- 33: Vorratsrolle, Papierrolle
- 34: Vertiefung
- 35: -
- 36: Transportelement
- 37: Transportmittel
- 38: Antriebseinrichtung, Antriebskette
- 39: Formelement, Walze
- 40: Vertiefung
- 41: Lagerelement
- 42: Abdeckblech
- 43: Oberkante
- 44: Richtungspfeil, Förderrichtung vorwärts
- 45: -
- 46: Richtungspfeil, Förderrichtung rückwärts

- d: Abstand
- u: Überdeckung

## Patentansprüche

1. Vorrichtung (01; 03) zur Förderung zumindest einer Vorratsrolle (04; 33) mit einer Rollenvorlagefläche (03; 32) auf der die Vorratsrolle (04; 33) mit sich im wesentlichen horizontal erstreckender Längsachse (06) ablegbar ist, wobei die Vorratsrolle (04; 33) in zumindest eine Förderrichtung (07; 08; 44; 46) mit ihrer Mantelfläche auf der Rollenvorlagefläche (03; 32) rollt, wobei die Vorrichtung (01; 31) zumindest ein Transportelement (17; 36) mit zumindest einer umlaufenden Antriebseinrichtung (02; 38) aufweist, wobei ein Trum (19) der Antriebseinrichtung (02; 38) mittelbar oder unmittelbar von unten mit der Mantelfläche der Vorratsrolle (04; 33) zusammenwirkt und zumindest in eine Förderrichtung (07; 08; 44; 46) antreibbar ist, wobei das Obertrum (19) der Antriebseinrichtung (02; 38) von unten an die Vorratsrolle (04; 33) angreift, **dadurch gekennzeichnet, dass** an der Vorrichtung (01; 31) zumindest zwei Antriebseinrichtungen (02; 38) in Förderrichtung (07; 08; 44; 46) hintereinander angeordnet sind, dass die hintereinander angeordneten Antriebseinrichtungen (02) zumindest ihrer Breite entsprechend seitlich versetzt angeordnet sind und sich in Förderrichtung (07; 08) jeweils soweit erstrecken, dass das Obertrum (19) einer vorderen Antriebseinrichtung (02) am zu einer nachfolgenden Antriebseinrichtung (02) weisenden Ende eine zumindest geringfügige Überdeckung (u) in Förderrichtung (07; 08) mit dem Obertrum (19) der nachfolgenden Antriebseinrichtung (02) aufweist.

2. Vorrichtung nach Anspruch 1, **dadurch gekennzeichnet, dass** sich die Rollenvorlagefläche (03, 32) im wesentlichen horizontal erstreckt.

3. Vorrichtung nach Anspruch 1, **dadurch gekennzeichnet, dass** die Rollenvorlagefläche (32) im wesentlichen bodeneben angeordnet ist.

4. Vorrichtung nach Anspruch 1, **dadurch gekennzeichnet, dass** zumindest an einer Seite der Rollenvorlagefläche (03) ein Transportmittel (09) zum Transport der Vorratsrolle (04) anordenbar ist, wobei die Höhe der Rollenvorlagefläche (03) zumindest auf der Seite, an der das Transportmittel (09) anordenbar ist, im wesentlichen der Höhe der Oberkante (24) des Transportmittels (09) entspricht.

5. Vorrichtung nach einem der Ansprüche 1 bis 4, **dadurch gekennzeichnet, dass** die Oberkante (27; 43) der Vorrichtung (01; 31) an der Seite der Rollenvorlagefläche (03; 32), an der das Transportmittel (09; 37) anordenbar ist, zumindest abschnittsweise so weit übersteht, dass das Transportmittel (09; 37) zumindest teilweise unterhalb der Oberkante (27; 43) anordenbar ist.

6. Vorrichtung nach den Ansprüchen 4 oder 5, **dadurch gekennzeichnet, dass** das Transportmittel (09; 37) in der Art eines Rollwagens mit einem muldenartig geformten Auflageelement (26) ausgebildet ist.

7. Vorrichtung nach einem der Ansprüche 1 bis 6, **dadurch gekennzeichnet, dass** an der Vorrichtung (01; 31) mehrere Antriebseinrichtungen (02; 38) vorgesehen sind, die einzeln und/oder in Gruppen getrennt voneinander ansteuerbar sind.

8. Vorrichtung nach einem der Ansprüche 1 bis 7, **dadurch gekennzeichnet, dass** an der Vorrichtung (01; 31) zumindest zwei parallel zueinander in Förderrichtung (07; 08; 44; 46) verlaufende Antriebseinrichtungen (02; 38) vorgesehen sind.

9. Vorrichtung nach Anspruch 8, **dadurch gekennzeichnet, dass** der seitliche Abstand (d) zwischen den Antriebseinrichtungen (02) kleiner oder gleich der halben Achslänge der zu fördernden Vorratsrollen (04) ist.

10. Vorrichtung nach Anspruch 9, **dadurch gekennzeichnet, dass** der Abstand (d) zwischen den Antriebseinrichtungen (02) im wesentlichen einem Drittel der Achslänge der zu fördernden Vorratsrollen (04) entspricht.

11. Vorrichtung nach einem der Ansprüche 1 bis 10, **dadurch gekennzeichnet, dass** die Antriebseinrichtung (02; 38) in der Art einer Antriebskette oder eines Antriebsriemens ausgebildet ist.

12. Vorrichtung nach einem der Ansprüche 1 bis 11, **dadurch gekennzeichnet, dass** die mit der Vorratsrolle (04) in Kontakt bringbare Seite der Antriebseinrichtung (02) derart ausgebildet ist, dass eine in Förderrichtung (07; 08) gerichtete Kraft reibschlüssig auf die Vorratsrolle (04) übertragbar ist.

13. Vorrichtung nach Anspruch 12, **dadurch gekennzeichnet, dass** die Antriebseinrichtung (02) in der Art eines Flach- oder Noppenriemens ausgebildet ist.

14. Vorrichtung nach einem der Ansprüche 1 bis 13, **dadurch gekennzeichnet, dass** die mit einer Vorratsrolle (33) in Kontakt bringbare Seite der Antriebseinrichtung (38) derart ausgebildet ist, dass eine in Förderrichtung (44; 46) gerichtete Kraft formschlüssig auf die Vorratsrolle (33) übertragbar ist.

15. Vorrichtung nach Anspruch 14, **dadurch gekennzeichnet, dass** an der zur Vorratsrolle (33) weisenden Seite des Obertrums (19) der Antriebseinrichtung (38) in bestimmten Abständen Formelemente (39) angeordnet sind, die sich über die Rollenvorlagefläche (32) hinaus nach oben erstrecken und mit der Mantelfläche der Vorratsrolle (33) in Kontakt bringbar sind.

16. Vorrichtung nach Anspruch 15, **dadurch gekennzeichnet, dass** die Formelemente (39) in der Art von Rollen oder Walzen ausgebildet sind, deren Mittelachse parallel zur Längsachse der Vorratsrolle (33) angeordnet ist.

17. Vorrichtung nach den Ansprüchen 15 oder 16, **dadurch gekennzeichnet, dass** die Formelemente (39) frei drehbar gelagert sind.

18. Vorrichtung nach einem der Ansprüche 1 bis 17, **dadurch gekennzeichnet, dass** zumindest die Teile der Antriebseinrichtung (19, 23), die mit der Vorratsrolle (04) in Kontakt bringbar sind, zumindest in Richtung der Gewichtskraft federnd gelagert sind.

19. Vorrichtung nach Anspruch 18, **dadurch gekennzeichnet, dass** zumindest die Teile der Antriebseinrichtung (19, 23), die mit der Vorratsrolle (04) in Kontakt bringbar sind, auf einem Trägerelement (21) abgestützt sind, das gegenüber dem die Rollenvorlagefläche (03) bildenden Teil der Vorrichtung (13) zumindest in Richtung der Gewichtskraft federnd gelagert ist.

20. Vorrichtung nach Anspruch 19, **dadurch gekennzeichnet, dass** das Trägerelement (21) als federnd gelagerter Verbindungssteg ausgebildet ist, der von unten am Obertrum (19) der Antriebseinrichtung (19, 23) oder an mit der Antriebseinrichtung verbundenen Formelementen (39) zur Anlage kommt.

21. Vorrichtung nach einem der Ansprüche 18 bis 20, **dadurch gekennzeichnet, dass** das Trägerelement (21) jeweils im Bereich der Umlenkwalzen auf zumindest einem Federelement (22), insbesondere einem Tellerfederpaket, gelagert ist.

22. Vorrichtung nach einem der Ansprüche 1 bis 21, **dadurch gekennzeichnet, dass** auf der Rollenvorlagefläche (03; 32) mehrere Vorratsrollen (04; 33) in Förderrichtung (07; 08; 44; 46) hintereinander und/oder nebeneinander anordenbar sind.

23. Vorrichtung nach einem der Ansprüche 1 bis 22, **dadurch gekennzeichnet, dass** die Vorrichtung (01; 31) mit einer Steuereinrichtung automatisch ansteuerbar ist.

24. Vorrichtung nach einem der Ansprüche 1 bis 23, **dadurch gekennzeichnet, dass** die Antriebseinrichtung (02; 38) in einem ersten Betriebszustand vorwärts und in einem zweiten Betriebszustand rückwärts antreibbar ist.

25. Vorrichtung nach Anspruch 15, **dadurch gekennzeichnet, dass** die Formelemente (39) federnd auf den Antriebselementen (38) angeordnet sind.

## Claims

1. An apparatus (01; 03 [*sic - recte* 31]) for conveying at least one supply roll (04; 33) with a roll-presentation area (03; 32) on which the supply roll (04; 33) is capable of being deposited with its longitudinal axis (06) extending substantially horizontally, wherein the supply roll (04; 33) rolls in at least one conveying direction (07; 08; 44; 46) with its generated face on the roll-presentation area (03; 32), wherein the apparatus (01; 31) has at least one conveyor element (17; 36) with at least one circulating driving device (02; 38), wherein one run (19) of the driving device (02; 38) co-operates indirectly or directly with the generated face of the supply roll (04; 33) from below and is capable of being driven in at least one conveying direction (07; 08; 44; 46), wherein the upper run (19) of the driving device (02; 38) engages on the supply roll (04; 33) from below, **characterized in that** at least two driving devices (02; 38) are arranged one behind the other in the conveying direction (07; 08; 44; 46) on the apparatus (01; 31), the driving devices (02) arranged one behind the other are arranged laterally offset at least in accordance with their width and extend so far in the conveying direction (07; 08) in each case that the upper run (19) of a front driving device (02) on the end directed towards a following driving device (02) has an at least slight overlap (u) in the conveying direction (07; 08) with the upper run (19) of the following driving device (02).

2. An apparatus according to Claim 1, **characterized in that** the roll-presentation area (03, 32) extends substantially horizontally.

3. An apparatus according to Claim 1, **characterized in that** the roll-presentation area (32) is arranged substantially level with the floor.

4. An apparatus according to Claim 1, **characterized in that** a conveying means (09) for conveying the supply roll (04) is capable of being arranged on at least one side of the roll-presentation area (03), wherein the height of the roll-presentation area (03), at least on the side on which the conveying means (09) is capable of being arranged, corresponds substantially to the height of the upper edge (24) of the conveying means (09).

5. An apparatus according to one of Claims 1 to 4, **characterized in that** the upper edge (27; 43) of the apparatus (01; 31) on the side of the roll-presentation area (03; 32), on which the conveying means (09; 37) is capable of being arranged, projects at least locally so far that the conveying means (09; 37) is capable of being arranged at least locally below the upper edge (27; 43).

6. An apparatus according to Claims 4 or 5, **characterized in that** the conveying means (09; 37) is constructed in the manner of a rolling carriage with a support element (26) shaped in the manner of a trough.

7. An apparatus according to one of Claims 1 to 6, **characterized in that** a plurality of driving devices (02; 38), which are capable of being actuated individually and/or in groups separately from one another, are provided on the apparatus (01; 31).

8. An apparatus according to one of Claims 1 to 7, **characterized in that** at least two driving devices (02; 38) extending parallel to each other in the conveying direction (07; 08; 44; 46) are provided on the apparatus (01; 31).

9. An apparatus according to Claim 8, **characterized in that** the lateral distance (d) between the driving devices (02) is smaller than or equal to half the axial length of the supply rolls (04) to be conveyed.

10. An apparatus according to Claim 9, **characterized in that** the distance (d) between the driving devices (02) corresponds to substantially a third of the axial length of the supply rolls (04) to be conveyed.

11. An apparatus according to one of Claims 1 to 10, **characterized in that** the driving device (02; 38) is constructed in the manner of a driving chain or a driving belt.

12. An apparatus according to one of Claims 1 to 11, **characterized in that** the side of the driving device (02) capable of being brought into contact with the supply roll (04) is constructed in such a way that a force directed in the conveying direction (07; 08) is capable of being transmitted to the supply roll (04) by friction locking.

13. An apparatus according to Claim 12, **characterized in that** the driving device (02) is constructed in the manner of a flat belt or knobbed belt.

14. An apparatus according to one of Claims 1 to 13, **characterized in that** the side of the driving device (38) capable of being brought into contact with a supply roll (33) is constructed in such a way that a force directed in the conveying direction (44; 46) is capable of being transmitted to the supply roll (33) in a positively locking manner.

15. An apparatus according to Claim 14, **characterized in that** shaped elements (39), which extend upwards beyond the roll-presentation area (32) and which are capable of being brought into contact with the generated face of the supply roll (33), are arranged at specified intervals on the side of the upper run (19) of the driving device (38) directed towards the supply roll (33).

16. An apparatus according to Claim 15, **characterized in that** the shaped elements (39) are constructed in the manner of rolls or rollers, the central axis of which is situated parallel to the longitudinal axis of the supply roll (33).

17. An apparatus according to Claims 15 or 16, **characterized in that** the shaped elements (39) are mounted so as to be freely rotatable.

18. An apparatus according to one of Claims 1 to 17, **characterized in that** at least the parts of the driving device (19, 23) which are capable of being brought into contact with the supply roll (04) are mounted in a springing manner at least in the direction of gravity.

19. An apparatus according to Claim 18, **characterized in that** at least the parts of the driving device (19, 23) which are capable of being brought into contact with the supply roll (04) are supported on a carrier element (21) which is mounted in a springing manner at least in the direction of gravity with respect to the part of the apparatus (13) [*sic*] forming the roll-presentation area (03).

20. An apparatus according to Claim 19, **characterized in that** the carrier element (21) is constructed in the form of a connecting web which is mounted in a springing manner and which comes to rest from below against the upper run (19) of the driving device (19, 23) or against shaped elements (39) connected to the driving device.

21. An apparatus according to one of Claims 18 to 20, **characterized in that** the carrier element (21) is mounted in each case on at least one spring element (22), in particular a stack of cup springs, in the region of the reversing rollers.

22. An apparatus according to one of Claims 1 to 21, **characterized in that** a plurality of supply rolls (04; 33) are capable of being arranged one behind the other in the conveying direction (07; 08; 44; 46) and/or adjacent to one another on the roll-presentation area (03; 32).

23. An apparatus according to one of Claims 1 to 22, **characterized in that** the apparatus (01; 31) is capable of being controlled automatically by a control device.

24. An apparatus according to one of Claims 1 to 23, **characterized in that** the driving device (02; 38) is capable of being driven forwards in a first operating state and backwards in a second operating state.

25. An apparatus according to Claim 15, **characterized in that** the shaped elements (39) are arranged on the driving elements (38) in a springing manner.

## Revendications

1. Dispositif (01 ; 03) de transport d'au moins un rouleau de réserve (04 ; 33) avec une surface de réception de rouleau (03 ; 32) sur laquelle le rouleau de réserve (04 ; 33) peut être déposé avec son axe longitudinal (06) s'étendant sensiblement horizontalement, le rouleau de réserve (04 ; 33) roulant en au moins une direction de transport (07 ; 08 ; 44 ; 46) avec sa face d'enveloppe sur la face de réception de rouleau (03 ; 32), le dispositif (01 ; 31) présentant au moins un élément de transport (17 ; 36) comprenant au moins un dispositif d'entraînement (02 ; 38) en rotation, un brin (19) du dispositif d'entraînement (02 ; 38) coopérant indirectement ou directement par le dessous avec la surface d'enveloppé du rouleau de réserve (04 ; 33) et étant susceptible d'être entraîné au moins en une direction de transport (07 ; 08 ; 44 ; 46), le brin supérieur (19) du dispositif d'entraînement (02 ; 38) agissant par le dessous sur le rouleau de réserve (04 ; 33), **caractérisé en ce que** sur le dispositif (01 ; 31) sont disposés l'un derrière l'autre dans la direction de transport (07 ; 08 ; 44 ; 46) au moins deux dispositifs d'entraînement (02 ; 38) et **en ce que** les dispositifs d'entraînement (02) disposés l'un derrière l'autre sont disposés de façon décalée latéralement de façon correspondante au moins à leur largeur et s'étendent dans la direction de transport (07 ; 08) chaque fois à un degré faisant que le brin supérieur (19) d'un dispositif d'entraînement avant (02) sur l'extrémité tournée vers un dispositif d'entraînement (02) aval présente un recouvrement (u) au moins de faible valeur dans la direction de transport (07 ; 08) avec le brin supérieur (19) du dispositif d'entraînement (02) aval.

2. Dispositif selon la revendication 1, **caractérisé en ce que** la surface de réception de rouleau (03 ; 32) s'étend sensiblement horizontalement.

3. Dispositif selon la revendication 1, **caractérisé en ce que** la surface de réception de rouleau (32) est disposée sensiblement dans le plan du sol.

4. Dispositif selon la revendication 1, **caractérisé en ce qu'**au moins sur un côté de la surface de réception de rouleau (03) est susceptible d'être disposé un moyen de transport (09) pour transporter le rouleau de réserve (04), la hauteur de la surface de réception de rouleau (03) au moins sur le côté sur lequel le moyen de transport (09) est susceptible d'être disposé correspondant sensiblement à la hauteur de l'arête supérieure (24) du moyen de transport (09).

5. Dispositif selon l'une des revendications 1 à 4, **caractérisé en ce que** l'arête supérieure (27 ; 43) du dispositif (01 ; 31) sur le côté de la surface de réception de rouleau (03 ; 32) sur lequel le moyen de transport (09 ; 37) est susceptible d'être disposé, est en saillie au moins par tronçon à un degré faisant que le moyen de transport (09 ; 37) est susceptible d'être disposé au moins partiellement au-dessous de l'arête supérieure (27 ; 43).

6. Dispositif selon la revendication 4 ou 5, **caractérisé en ce que** le moyen de transport (09 ; 37) est réalisé à la manière d'un chariot roulant avec un élément de pose (27) conformé en auge.

7. Dispositif selon l'une des revendications 1 à 6, **caractérisé en ce que** sur le dispositif (01 ; 31) sont prévus plusieurs dispositifs d'entraînement (02 ; 38) susceptibles d'être commandés individuellement ou par couple, séparément les uns des autres.

8. Dispositif selon l'une des revendications 1 à 7, **caractérisé en ce que** sur le dispositif (01 ; 31) sont prévus au moins deux dispositifs d'entraînement (02 ; 38) s'étendant parallèlement l'un à l'autre dans la direction de transport (07 ; 08 ; 44 ; 46).

9. Dispositif selon la revendication 8, **caractérisé en ce que** l'espacement latéral (d) entre les dispositifs d'entraînement (02) est inférieur ou égal à la moitié de la longueur axiale des rouleaux de réserve (04) à transporter.

10. Dispositif selon la revendication 9, **caractérisé en ce que** l'espacement (d) entre les dispositifs d'entraînement (02) correspond essentiellement à un tiers de la longueur axiale des rouleaux de réserve (04) à transporter.

11. Dispositif selon l'une des revendications 1 à 10, **caractérisé en ce que** le dispositif d'entraînement (02 ; 38) est réalisé à la manière d'une chaîne d'entraînement ou d'une courroie d'entraînement.

12. Dispositif selon l'une des revendications 1 à 11, **caractérisé en ce que** la face susceptible d'être mise en contact avec le rouleau de réserve (04) du dispositif d'entraînement (02) est réalisée de manière à pouvoir transmettre par une liaison à friction exercée sur le rouleau de réserve (04) une force orientée dans la direction de transport (07 ; 08).

13. Dispositif selon la revendication 12, **caractérisé en ce que** le dispositif d'entraînement (02) est réalisé à la manière d'une courroie à surface plate ou à tétons.

14. Dispositif selon l'une des revendications 1 à 13, **caractérisé en ce que** la face susceptible d'être mise en contact avec un rouleau de réserve (33) du dispositif d'entraînement (38) est réalisée de manière qu'une force, orientée dans la direction de transport (44 ; 46) puisse être transmise au rouleau de réserve (33) par une liaison par ajustement de forme.

15. Dispositif selon la revendication 14, **caractérisé en ce que** sur la face tournée vers le rouleau de réserve (33) du brin supérieur (19) du dispositif d'entraînement (38) à des espacements déterminés sont disposés des éléments profilés (39) s'étendant vers le haut sur la surface de réception de rouleau (32) et susceptibles d'être mis en contact avec la surface d'enveloppe du rouleau de réserve (33).

16. Dispositif selon la revendication 15, **caractérisé en ce que** les éléments profilés (39) sont réalisés à la manière de galets ou de rouleaux dont l'axe médian est parallèle à l'axe longitudinal du rouleau de réserve (33).

17. Dispositif selon les revendications 15 ou 16, **caractérisé en ce que** les éléments profilés (39) sont montés de façon à pouvoir tourner librement.

18. Dispositif selon l'une des revendications 1 à 17, **caractérisé en ce qu'**au moins les parties du dispositif d'entraînement (19 ; 23) susceptibles d'être mis en contact avec le rouleau de réserve (04) sont montées élastiquement au moins dans la direction de la force venant de leur poids.

19. Dispositif selon la revendication 18, **caractérisé en ce qu'**au moins les parties du dispositif d'entraînement (19 ; 23) susceptibles d'être mises en contact avec le rouleau de réserve (04) sont soutenues sur un élément support (21) monté élastiquement au moins dans la direction de la force venant du poids par rapport à la partie, formant la surface de réception de rouleau (03), du dispositif (13).

20. Dispositif selon la revendication 19, **caractérisé en ce que** l'élément support (21) est réalisé sous la forme de nervure de liaison monté élastiquement venant en appui par le dessous sur le brin supérieur (19) du dispositif d'entraînement (19 ; 23) ou sur des éléments profilés (39) reliés au dispositif d'entraînement.

21. Dispositif selon l'une des revendications 18 à 20, **caractérisé en ce que** l'élément support (21) est monté chaque fois dans la zone des rouleaux de renvoi sur au moins un élément formant ressort (22), en particulier un paquet de ressorts-disques.

22. Dispositif selon l'une des revendications 1 à 21, **caractérisé en ce qu'**une pluralité de rouleaux de réserve (04 ; 33) est susceptible d'être disposée les uns derrière les autres dans la direction de transport (07 ; 08 ; 44 ; 46) et/ou les uns à côté des autres, sur la surface de prestation de rouleaux (03 ; 32).

23. Dispositif selon l'une des revendications 1 à 22, **caractérisé en ce que** le dispositif (01 ; 31) est susceptible d'être commandé automatiquement à l'aide d'un dispositif de commande.

24. Dispositif selon l'une des revendications 1 à 23, **caractérisé en ce que** le dispositif d'entraînement (02 ; 38) est susceptible d'être entraîné en avant en un premier état de fonctionnement et d'être entraîné en arrière en un deuxième état de fonctionnement.

25. Dispositif selon la revendication 15, **caractérisé en ce que** les éléments profilés (39) sont disposés élastiquement sur les éléments d'entraînement (38).
